# EUROPÄISCHE PATENTSCHRIFT

(11) **EP 3 580 839 B1**
(45) Veröffentlichungstag und Bekanntmachung des Hinweises auf die Patenterteilung: **27.01.2021**
(21) Anmeldenummer: 17715728.6
(22) Anmeldetag: 05.04.2017
(51) Int. Cl.: H02M 1/32, H02H 7/122, H02H 9/04, H02M 7/483

(54) **MEHRPHASIGER MEHRSTUFENSTROMRICHTER**
MULTIPHASE MULTILEVEL CONVERTER
ONDULEUR MULTIPHASE MULTINIVEAU

(43) Veröffentlichungstag der Anmeldung: 18.12.2019
(73) Patentinhaber: Siemens Energy Global GmbH & Co. KG, 81739 München (DE)
(72) Erfinder: STANKEWITZ, Jan Christoph, 90411 Nürnberg (DE); STARSCHICH, Ewgenij, 91452 Wilhermsdorf (DE); VOR DEM BERGE, Markus, 90489 Nürnberg (DE)
(86) Internationale Anmeldenummer: PCT/EP2017/058099
(87) Internationale Veröffentlichungsnummer: WO 2018/184671

(56) Entgegenhaltungen:
- EP-A1- 0 234 368
- EP-A1- 2 595 302
- EP-A1- 3 068 008
- CN-A- 103 063 903
- US-A1- 2014 226 374

## Beschreibung

Die Erfindung betrifft einen mehrphasigen Mehrstufenstromrichter gemäß dem Oberbegriff des Anspruchs 1.

An ein mehrphasiges Wechselstromnetz angeschlossene Stromrichterstationen zur Erzeugung einer Spannungsversorgung mit einer Gleichspannung (DC-Spannung) im Hochspannungsbereich sind bekannt. Eine Stromrichterstation umfasst einen Transformator, an den primärseitig das Wechselstromnetz angeschlossen ist. Das Wechselstromnetz ist mittels eines AC-Leistungsschalters durch ein Ausschaltsignal (ESOF-Signal, ESOF: Emergency Switch OFF) abschaltbar. Sekundärseitig sind die Wicklungen des Transformators wahlweise in Dreieckschaltung oder in Sternschaltung mit einem Sternpunkt geschaltet und an einen Stromrichter angeschlossen, oft in Form eines mehrphasigen Mehrstufenstromrichters (auch abgekürzt MMC: Modular Multilevel Converter). An dessen Wechselspannungs-Anschlüssen (AC-Anschlüssen) liegen die sekundärseitigen Wechselspannungen (AC-Spannungen) des Transformators an, und an den beiden Gleichspannungs-Anschlüssen (DC-Anschlüssen) des Mehrstufenstromrichters steht die Gleichspannung (DC-Spannung) zur Verfügung.

Der mehrphasige Mehrstufenstromrichter verfügt für jede Phase über ein Phasenmodul mit einem der AC-Anschlüsse. An jedem Phasenmodul sind zwei Stromrichtermodule angeschlossen, die jeweils in Serie mit einer Induktivität geschaltet sind.

Jedes Stromrichtermodul ist aus einer Vielzahl von elektrisch in Reihe geschalteten zweipoligen Sub-Modulen gebildet, die folgendes aufweisen: a) mehrere Halbleiterschalter z.B. in Form von IGBTs (Insulated Gate Bipolar Transistors), die in Reihe zusammengeschaltet sind, b) einen Energiespeicher in Form eines Kondensators, der von den Halbleiterschaltern aufladbar und entladbar ist, c) einen Bypass-Schalter, der den Energiespeicher bei Überschreitung einer zugehörigen Grenzspannung kurzschließt, d) einen Signaleingang für ein Blockiersignal, welches (z.B. im Fehlerfall) alle Halbleiterschalter öffnet.

Die Halbleiterschalter können als Vollbrückenschaltung (VSC-Vollbrückenschaltung, VSC: Voltage Sourced Converter) oder Halbbrückenschaltung (VSC-Halbbrückenschaltung) ausgeführt sein.

Die zum Schutz der Sub-Module vorgesehenen Bypass-Schalter sind zwischen den Anschlussklemmen der Sub-Module angeordnet und überbrücken das jeweils zugehörige Sub-Modul bei Überschreitung der Grenzspannung.

Eine Schutzfunktion des Mehrstufenstromrichters detektiert jeweils den durch die Stromrichtermodule fließenden Strom. Schwerwiegende stromrichterinterne Kurzschlüsse werden typischerweise anhand von auftretenden Fehlerströmen erkannt.

Zum Schutz des Stromrichters werden die Sub-Module beim Auftreten solcher Fehlerströme mittels eines Blockiersignals blockiert (die Halbleiter geöffnet) und das Wechselstromnetz durch den AC-Leistungsschalter mittels Ausschaltsignal (ESOF-Signal) abgeschaltet.

Nachteilig ist dabei, dass in der Zeit (vom Blockieren der Sub-Module bis zum Öffnen des AC-Leistungsschalters) die Differenz zwischen der DC Spannung und der aufgeprägte AC-Spannung über den Stromrichtermodulen anliegt. Dies führt zu einem Aufladen der Kondensatoren der Sub-Module; abhängig von der Höhe und Dauer der anliegenden Spannungsdifferenz kann es zu einer Spannungsüberhöhung kommen, die mit einer Überschreitung der zulässigen Spannung (der Grenzspannung) bei einem oder mehreren Sub-Modulen verbunden sein kann. Eine Überschreitung der Grenzspannung eines Sub-Moduls aufgrund der Überladung führt jeweils zur Auslösung des integrierten Bypass-Schalters des Sub-Moduls, das damit ausfällt, d.h. eine Überladung kann zum Ausfall mehrerer oder sogar aller Sub-Module eines Stromrichtermoduls führen.

Eine Möglichkeit die Stromrichtermodule vor einer Überladung und der damit verbundenen Gefahr der Zündung der integrierten Bypass-Schalter zu schützen, besteht darin, die Anzahl der Sub-Module in den Stromrichtermodulen soweit zu erhöhen, dass die zulässigen Spannungen (die Grenzspannungen) der Sub-Module mit hoher Sicherheit nicht überschritten werden. Diese Lösung ist technisch sehr aufwendig, zumal die zusätzlichen Sub-Module viel Platz benötigen. Allerdings funktioniert diese Lösung sowohl bei VSC-Vollbrücken-Stromrichtern als auch bei VSC-Halbbrücken-Stromrichtern.

Aus der Patentanmeldung CN 103063903 A ist ein Mehrstufenstromrichter bekannt, bei dem zwischen dem positiven Gleichspannungsanschluss und Erdpotential bzw. zwischen dem negativen Gleichspannungsanschluss und Erdpotential jeweils ein Ableiter geschaltet ist.

Die Patentanmeldung US 2014/0226374 A1 offenbart einen Mehrstufenstromrichter, dessen Sub-Module jeweils einen Bypass-schalter zum Kurzschließen des Energiespeichers aufweisen.

Die europäische Patentanmeldung EP 3 068 008 A1 offenbart einen Mehrstufenstromrichter, bei dem parallel zu der Reihenschaltung von Submodulen ein Thyristor angeordnet ist.

Aus der europäischen Patentanmeldung EP 2 595 302 A1 ist bekannt, bei einem Mehrstufenstromrichter an einer Stromschiene ein Bypass-Element vorzusehen, um ein Sub-Modul überbrücken zu können, wenn es von der Stromschiene entfernt wird.

Aus der europäischen Patentanmeldung EP 0 234 368 A1 ist ein Turmaufbau für Hochspannungsanlagen bekannt. Der Turmaufbau besteht aus mehreren Etagen, die mittels Isolatoren miteinander verbunden sind.

Die Aufgabe der Erfindung ist es, die Sub-Module der Stromrichtermodule vor einer Überladung und der damit verbundenen Gefahr einer Zündung der integrierten Bypass-Schalter zu schützen, die neben VSC-Halbbrücken-Stromrichtern auch für VSC-Vollbrücken-Stromrichter geeignet ist.

Die Aufgabe wird durch die Merkmale des Anspruchs 1 gelöst; die Unteransprüche stellen vorteilhafte Ausgestaltungen dar.

Die Lösung sieht vor, dass parallel zum Stromrichtermodul ein Modulableiter geschaltet ist, der die Stromrichterspannung bei Überschreitung einer zweiten Grenzspannung nach Art eines Ventils begrenzt, indem der Modulableiter unterhalb der zweiten Grenzspannung im Sperrmodus und oberhalb der zweiten Grenzspannung im Durchlassmodus arbeitet, wobei im Durchlassmodus ein die Stromrichterspannung begrenzender Strom durch den Modulableiter fließt.

Ein Zünden der Bypass-Schalter lässt sich sicher verhindern, wenn die zweite Grenzspannung kleiner als die Summe der ersten Grenzspannungen der Sub-Module ist, so dass ein Zünden der Bypass-Schalter sicher verhindert ist.

Zweckmäßigerweise ist der Modulableiter als High Cooling Arrester ausgeführt. Der High Cooling Arrester wird ohne Gehäuse ausgeführt, wodurch eine bessere Kühlung und somit eine höhere Wärmeabfuhrt erzielt wird.

Baulich platzsparend ist es, wenn jedes Stromrichtermodul höchstens aus zwei Stromrichtertürmen gebildet ist. Eine Konfiguration mit mehr als zwei Stromrichtertürmen ist baulich zwar realisierbar, aber nicht platzsparend. Gemäß der Erfindung ist jedes Stromrichtermodul aus zwei Stromrichtertürmen gebildet.

Zweckmäßigerweise ist der Modulableiter weiter in hängender oder stehender Ausführung zwischen den Stromrichtertürmen eingebaut.

Die Erfindung wird nachfolgend anhand einer Zeichnung näher beschrieben. Es zeigen:
- Fig. 1: zeigt schematisch eine elektrische Schaltung einer Stromrichterstation mit einem dreiphasigen Mehrstufenstromrichter,
- Fig. 2: ein Stromrichtermodul des Mehrstufenstromrichters gemäß Fig. 1,
- Fig. 3: ein Sub-Modul mit speziellen Leistungshalbleiterbauelementen IGBT (Insulated Gate Bipolar Transistor) in Vollbrückenschaltung,
- Fig. 4: ein Sub-Modul mit speziellen Leistungshalbleiterbauelementen IGBT (Insulated Gate Bipolar Transistor) in Halbbrückenschaltung,
- Fig. 5: eine Vorderansicht einer baulichen Anordnung eines Stromrichtermoduls mit zwei Stromrichtertürmen und einem Modulableiter und
- Fig. 6: eine Draufsicht der baulichen Anordnung gemäß Fig. 5.

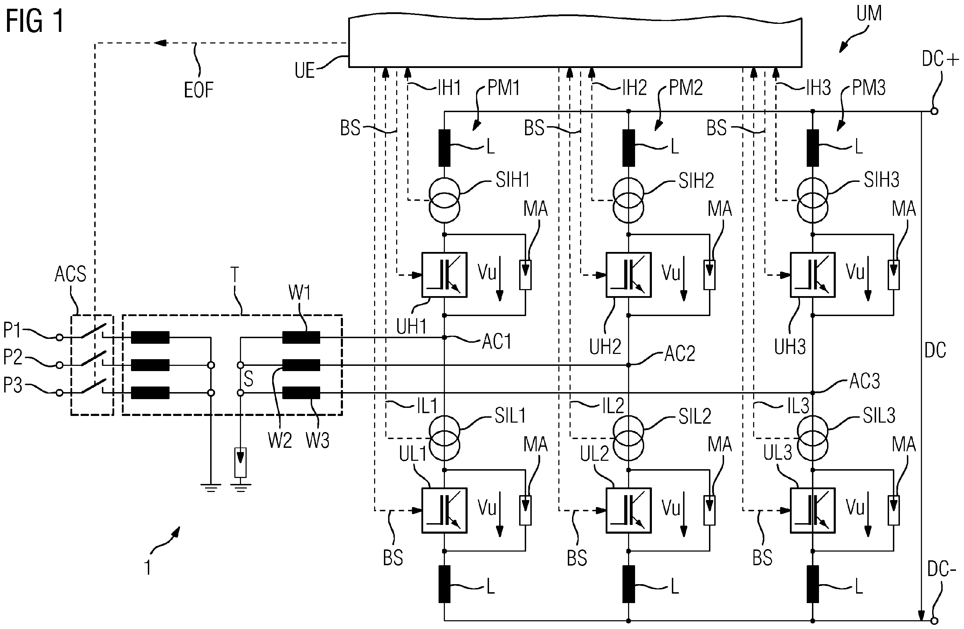

Fig. 1 zeigt schematisch eine elektrische Schaltung 1 einer Stromrichterstation, die aus einer dreiphasigen Wechselspannung eines Wechselstromnetzes eine DC-Spannung (Gleichspannung) erzeugt. Dazu sind die drei Phasen P1, P2, P3 des Wechselstromnetzes primärseitig an einen Transformator T angeschlossen. Über einen Hauptschalter ACS lassen sich die drei Phasen P1, P2, P3 mit dem Transformator T verbinden und vom Transformator T trennen.

Die drei sekundärseitigen Wicklungen W1, W2, W3 des Transformators T sind hier in Sternschaltung geschaltet.

Die Wicklungen W1, W2, W3 sind jeweils mit einem von drei eingangsseitigen AC-Anschlüssen AC (oder entsprechend AC1, AC2, AC3 für die drei einzelnen AC-Anschlüsse) eines mehrphasigen Mehrstufenstromrichters MMC verbunden, der ausgangsseitig zwei an Gleichstrom-Sammelschienen angeschlossene gemeinsame DC-Anschlüsse DC (oder entsprechend DC+, DC-) aufweist, an denen eine Spannung DC (als Spannungsversorgung) zur Verfügung steht. Der DC-Anschluss DC+ ist der positive Pol und der DC-Anschluss DC- der negative Pol der DC-Spannung.

Der Stromrichter MMC verfügt über drei Phasenmodule PM1, PM2, PM3 mit jeweils einem der drei AC-Anschlüsse AC1, AC2, AC3. Die Phasenmodule PM1, PM2, PM3 sind parallel geschaltet und mit den beiden gemeinsamen DC-Anschlüssen DC+, DC- verbunden.

Jedes Phasenmodul PM1, PM2, PM3 umfasst zwei in Reihe geschaltete Stromrichtermodule UL, UH (oder entsprechend UL1, UH1, UL2, UH2, UL3, UH3; für die hier gezeigte Bipolkonfiguration steht H hier für High und L für Low), die jeweils über eine Induktivität L mit einem der beiden DC-Anschlüsse DC+, DC- verbunden sind und zwischen denen der AC-Anschluss AC1, AC2, AC3 angeordnet ist.

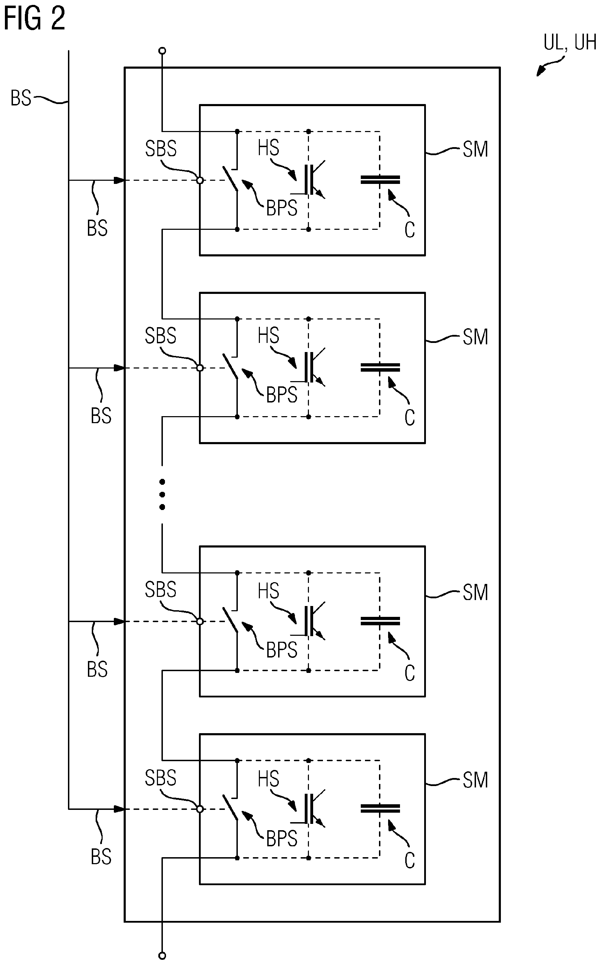

Fig. 2 zeigt schematisch, dass jedes Stromrichtermodul UL, UH aus einer Vielzahl von elektrisch in Reihe geschalteten zweipoligen Sub-Modulen SM gebildet ist. Die Sub-Module SM weisen gesteuerte Halbleiterschalter HS auf, die hier aus Leistungshalbleiterbauelementen IGBT (Insulated Gate Bipolar Transistor) gebildet sind. Die Halbleiterschalter HS sind weiter in Vollbrückenschaltung (VSC-Vollbrückenschaltung, VSC: Voltage Sourced Converter) ausgeführt, können aber auch in Halbbrückenschaltung (VSC-Halbbrückenschaltung) ausgeführt sein. Weiter ist jeweils ein Energiespeicher C in Form eines Kondensators vorhanden, der von den Halbleiterschaltern HS aufladbar und entladbar ist. Ein Bypass-Schalter BS schließt das Sub-Modul SM bei Überschreitung einer zugehörigen Sub-Modul-Grenzspannung (der ersten Grenzspannung) kurz.

Über einen Signaleingang SBS für ein Blockiersignal BS lassen sich die Halbleiterschalter HS des Sub-Moduls SM öffnen (blockieren).

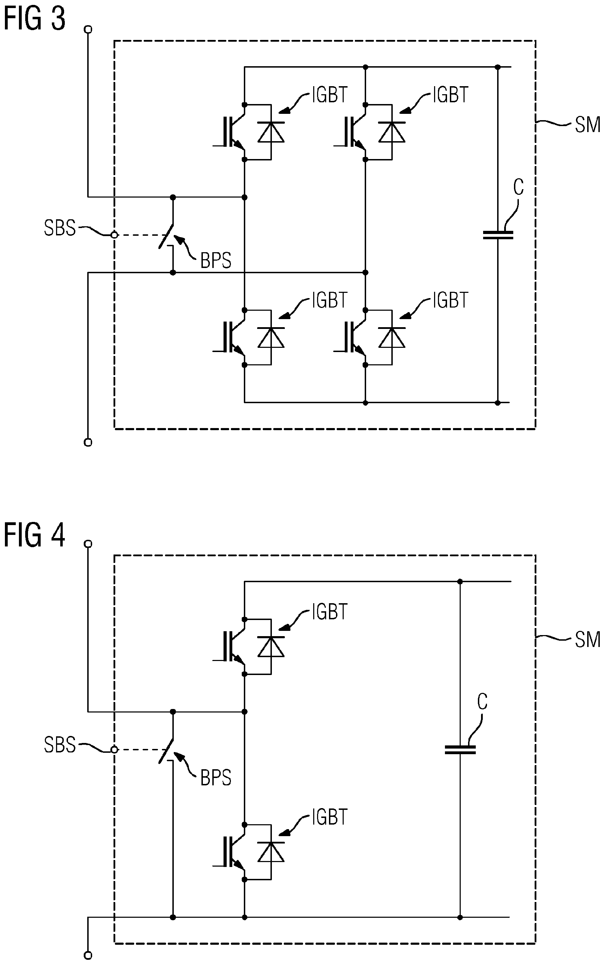

Fig. 3 zeigt ein Sub-Modul SM mit speziellen Leistungshalbleiterbauelementen IGBT (Insulated Gate Bipolar Transistor) in Vollbrückenschaltung; Fig. 4 in Halbbrückenschaltung.

Wie Fig. 1 weiter zeigt, ist parallel zu jedem Stromrichtermodul UL, UH ein Modulableiter MA geschaltet, der als Überspannungsableiter die Stromrichterspannung VU, also die Spannung am Stromrichtermodul, bei Überschreitung einer Stromrichtermodul-Grenzspannung (der zweiten Grenzspannung) nach Art eines Ventils begrenzt, indem der Modulableiter MA oberhalb der zweiten Grenzspannung im Sperrmodus und unterhalb der zweiten Grenzspannung im Durchlassmodus arbeitet, in dem ein die Stromrichterspannung VU begrenzender Strom durch den Modulableiter MA fließt.

Ein Stromsensor SIH, SIL (oder entsprechend SIH1, SIH2, SIH3, SIL1, SIL2, SIL3) des Mehrstufenstromrichters MMC detektiert den durch das jeweilige Stromrichtermodul UL, UH fließenden Strom IH, IL (oder entsprechend IH1, IH2, IH3, IL1, IL2, IL3). Der Strom IH, IL der Stromsensoren SIH, SIL wird von einer Überwachungseinheit UE überwacht.

Im Fehlerfall, z.B. bei schwerwiegenden stromrichterinternen Kurzschlüssen, gibt die Überwachungseinheit UE Blockiersignale BS an die Sub-Module SM und ein Ausschaltsignal ESOF an den AC-Leistungsschalter ACS aus, so dass alle Halbleiterschalter HS der Sub-Module und der AC-Leistungsschalter ACS geöffnet werden.

In der Zeit, d.h. vom Öffnen der Sub-Module SM bis zum Öffnen des AC-Leistungsschalters ACS, liegt die AC-seitig aufgeprägte Wechselspannung AC1, AC2, AC3 (d.h. eine Spannungsdifferenz) an den Stromrichtermodulen UL, UH (beispielsweise für ca. 120 ms) an. In dieser Zeit werden die Energiespeicher C der Sub-Module SM aufgeladen, wodurch sich die Spannung VU am Stromrichtermodul UL, UH und entsprechend an den Sub-Modulen SM erhöht.

Eine Überschreitung der Submodul-Grenzspannung durch Überladung wird durch den Modulableiter MA verhindert, der die Spannung am Stromrichtermodul UM nicht über die Stromrichtermodul-Grenzspannung steigen lässt, die dividiert durch die Anzahl der Sub-Module SM des Stromrichtermoduls UM kleiner als die Submodul-Grenzspannung ist, so dass die Bypass-Schalter BS in der Zeit bis zum Öffnen des AC-Leistungsschalters ACS nicht auslösen, d.h. durch den Modulableiter MA kommt es nicht mehr zu einem Ausfall von Sub-Modulen SM durch Zünden der Bypass-Schalter BS infolge einer Überladung.

Der Modulableiter ist elektrisch also so ausgelegt, dass bis zum Blockierzeitpunkt nahezu keine Ströme in den Modulableiter fließen und gleichzeitig die Submodul-Grenzspannung (die maximal erlaubte transiente Spannung) pro Sub-Modul SM nicht überschritten wird. Vom Blockierzeitpunkt an setzt der Modulableiter MA die damit verbundene Energie in kürzester Zeit in Wärme um. Aufgrund des geringen Spannungsabstandes zwischen der Spannung zum Blockierzeitpunkt und der Grenzspannung erfolgt die Ausführung mit einem High Cooling Arrester (HCA).

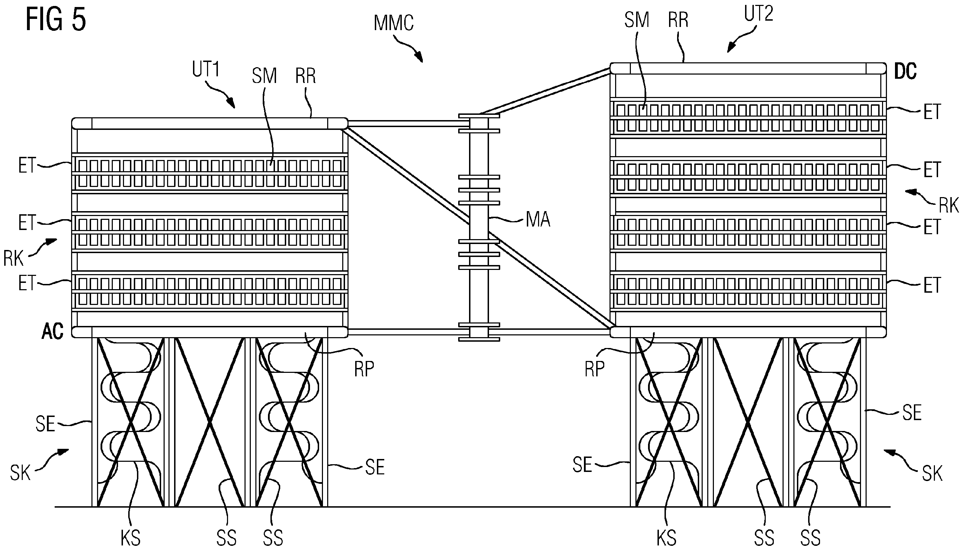

Fig. 5 zeigt eine Vorderansicht der baulichen Anordnung eines Stromrichtermoduls UM, die aus zwei Stromrichtertürmen UT1, UT2 gebildet ist. Jeder Stromrichterturm UT1, UT2 weist unten eine Stützkonstruktion SK zum elektrisch isolierten Aufständern einer vertikalen Rahmenkonstruktion RK mit übereinander angeordneten Etagen ET auf einem festen Untergrund.

Die Rahmenkonstruktion RK verfügt bezogen auf Fig. 5 auf der linken Seite über drei Etagen ET und auf der rechten Seite über vier Etagen ET, in denen jeweils Sub-Module SM des Stromrichtermoduls UM entsprechend der Reihenfolge in der Reihenschaltung seitlich nebeneinander angeordnet und elektrisch miteinander verbunden sind. Die Sub-Modul-Reihen unmittelbar benachbarter Etagen eines einzelnen Stromrichterturms UT1, UT2 als auch die beiden Stromrichtertürme UT1 und UT2 sind zur Bildung der Gesamt-Reihenschaltung ebenfalls elektrisch entsprechend verbunden.

Oberhalb und unterhalb der drei bzw. vier Etagen ET befinden sich Rohrrahmen RR als Abschirmung.

Die Stützkonstruktion weist Stützelemente SE und Spannseile SS auf, welche der Stützkonstruktion SK eine hinreichende Stabilität und Elastizität gegenüber Erschütterungen geben. Über Schläuche KS wird den Sub-Modulen SM zur Kühlung ein Kühlmittel zugeführt.

Zwischen den beiden Stromrichtertürmen UT1, UT2 ist ein Modulableiter MA angeordnet, hier beispielhaft in hängender Ausführung; grundsätzlich ist auch eine stehende Ausführung möglich. Der Modulableiter MA ist zu seiner besseren Kühlung und damit zur Verbesserung seiner thermischen Stabilität als High Cooling Arrester (Überspannungsableiter) und somit ohne Gehäuse ausgeführt.

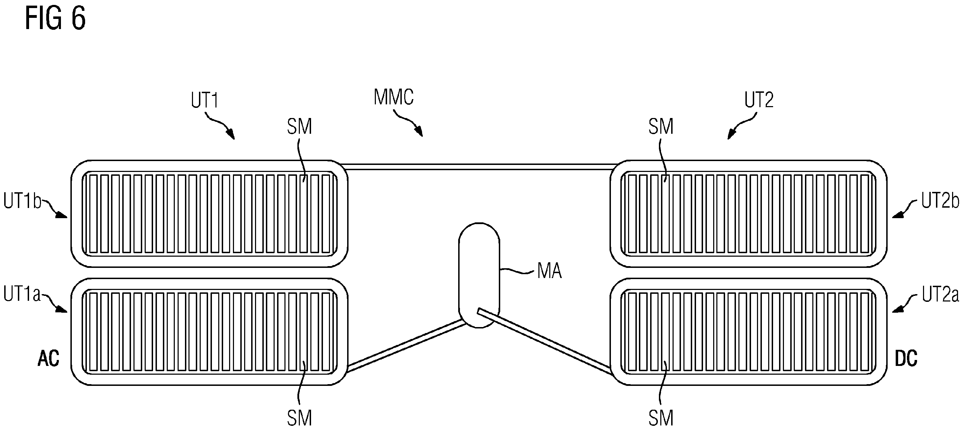

Fig. 6 zeigt die zu Fig. 5 gehörige Draufsicht auf das Stromrichtermodul UM mit den beiden Stromrichtertürme UT1, UT2 und dem Modulableiter MA. Man erkennt, dass jeder der Stromrichtertürme UT1, UT2 aus je zwei Halbtürmen UT1a, UT1b, UT2a, UT2b aufgebaut ist.

Wie man in Fig. 5 und 6 sieht, sind die beiden Stromrichtertürme UT1, UT2 nebeneinander angeordnet. Der Modulableiter MA befindet sich seitlich unmittelbar neben jedem der beiden Stromrichtertürme UT1, UT2 und hier bei zwei Stromrichtertürmen UT1, UT2 unmittelbar zwischen den beiden Stromrichtertürme UT1, UT2. Unmittelbar neben einem Stromrichterturm UT1, UT2 in dem Sinne, dass keine weiteren elektrischen Komponenten dazwischen angeordnet sind.

## Patentansprüche

1. Mehrphasiger Mehrstufenstromrichter (MMC),
mit einem Phasenmodul (PM1, PM2, PM3), das ein Stromrichtermodul (UL, UH) aufweist, das aus einer Vielzahl von elektrisch in Reihe geschalteten zweipoligen Sub-Modulen (SM) gebildet ist, die aufweisen
a) mehrere Halbleiterschalter (HS), die in Reihe zusammengeschaltet sind,
b) einen Energiespeicher (C), der von den Halbleiterschaltern (HS) aufladbar und entladbar ist,
c) einen Bypass-Schalter (BPS), der den Energiespeicher (C) bei Überschreitung einer zugehörigen ersten Grenzspannung kurzschließt,
d) einen Signaleingang (SBS) für ein Blockiersignal (BS), welches alle Halbleiterschalter (HS) des Sub-Moduls (SM) öffnet,
**dadurch gekennzeichnet,**
**dass** parallel zum Stromrichtermodul (UL, UH) ein Modulableiter (MA) als Überspannungsableiter geschaltet ist, der die Stromrichterspannung bei Überschreitung einer zweiten Grenzspannung nach Art eines Ventils begrenzt, indem der Modulableiter (MA) unterhalb der zweiten Grenzspannung im Sperrmodus und oberhalb der zweiten Grenzspannung im Durchlassmodus arbeitet, wobei im Durchlassmodus ein die Stromrichterspannung begrenzender Strom durch den Modulableiter (MA) fließt,
jedes Stromrichtermodul (UL, UH) aus zwei in Reihe geschalteten Stromrichtertürmen (UT1, UT2) ausgebildet ist, und
der Modulableiter (MA) in hängender oder stehender Ausführung zwischen den Stromrichtertürmen (UT1, UT2) eingebaut ist, in dem Sinne, dass keine weiteren elektrischen Komponenten dazwischen angeordnet sind.

2. Mehrstufenstromrichter nach Anspruch 1,
**dadurch gekennzeichnet,**
**dass** die zweite Grenzspannung kleiner als die Summe der ersten Grenzspannungen der Sub-Module (SM) ist, so dass ein Zünden der Bypass-Schalter (BPS) sicher verhindert ist.

3. Mehrstufenstromrichter nach Anspruch 1 oder 2,
**dadurch gekennzeichnet,**
**dass** der Modulableiter (MA) ohne Gehäuse ausgeführt ist.

4. Mehrstufenstromrichter nach einem der Ansprüche 1 bis 3,
**dadurch gekennzeichnet,**
**dass** der Modulableiter (MA) als High Cooling Arrester ausgeführt ist.

## Claims

1. Multiphase multilevel power converter (MMC),
having a phase module (PM1, PM2, PM3) which has a power converter module (UL, UH) formed from a multiplicity of two-pole submodules (SM) which are electrically connected in series and have
a) a plurality of semiconductor switches (HS) which are connected together in series,
b) an energy store (C) which can be charged and discharged by the semiconductor switches (HS),
c) a bypass switch (BPS) which short-circuits the energy store (C) if an associated first limit voltage is exceeded,
d) a signal input (SBS) for a blocking signal (BS) which opens all semiconductor switches (HS) of the submodule (SM),
**characterized**
**in that** a module arrester (MA) is connected in parallel with the power converter module (UL, UH) as a surge arrester and limits the power converter voltage in the manner of a valve if a second limit voltage is exceeded by virtue of the module arrester (MA) operating in the blocking mode below the second limit voltage and operating in the conducting mode above the second limit voltage, wherein a current limiting the power converter voltage flows through the module arrester (MA) in the conducting mode,
each power converter module (UL, UH) is formed from two power converter towers (UT1, UT2) connected in series, and
the module arrester (MA) is installed in a suspended or standing manner between the power converter towers (UT1, UT2) in the sense that no further electrical components are arranged in between.

2. Multilevel power converter according to Claim 1,
**characterized**
**in that** the second limit voltage is less than the sum of the first limit voltages of the submodules (SM), with the result that triggering of the bypass switches (BPS) is reliably prevented.

3. Multilevel power converter according to Claim 1 or 2,
**characterized**
**in that** the module arrester (MA) is designed without a housing.

4. Multilevel power converter according to one of Claims 1 to 3,
**characterized**
**in that** the module arrester (MA) is in the form of a high cooling arrester.

## Revendications

1. Onduleur (MMC) polyphasé à plusieurs niveaux,
comprenant un module (PM1, PM2, PM3) de phase, qui a un module (UL, UH) d'onduleur, formé d'une pluralité de sous-modules (SM) bipolaires, montés électriquement en série, qui ont
a) plusieurs interrupteurs (HS) à semi-conducteur, qui sont montés en série,
b) un accumulateur (C) d'énergie, qui peut être chargé et déchargé par les interrupteurs (HS) à semi-conducteur,
c) un interrupteur (BPS) de dérivation, qui court-circuite l'accumulateur (C) d'énergie, lorsqu'une première tension limite associée est dépassée,
d) une entrée (SBS) de signal pour un signal (BS) de blocage, qui ouvre tous les interrupteurs (HS) à semi-conducteur du sous-module (SM),
**caractérisé**
**en ce qu'**en parallèle au module (UL, UH) d'onduleur est monté, comme limiteur de surtensions, un limiteur (MA) de module, qui limite la tension de l'onduleur lors du dépassement d'une deuxième tension limite, à la manière d'une soupape, par le fait que le limiteur (MA) de module travaille en dessous de la deuxième tension limite en mode bloqué et au dessus de la deuxième tension limite en mode passant, dans lequel, dans le mode passant, un courant limitant la tension de l'onduleur passe dans le limiteur (MA) de module,
chaque module (UL, UH) d'onduleur est constitué de deux tours (UT1, UT2) d'onduleur montées en série, et
le limiteur (MA) de module est inséré en une réalisation suspendue ou verticale, entre les tours (UT1, UT2) d'onduleur, en ce sens qu'aucun autre composant électrique n'est monté entre elles.

2. Onduleur à plusieurs niveaux suivant la revendication 1,
**caractérisé**
**en ce que** la deuxième tension limite est plus basse que la somme des premières tensions limites des sous-modules (SM), de manière à empêcher, d'une manière sûre, un amorçage de l'interrupteur (BPS) de dérivation.

3. Onduleur à plusieurs niveaux suivant la revendication 1 ou 2,
**caractérisé**
**en ce que** le limiteur (MA) de module est réalisé sans boîtier.

4. Onduleur à plusieurs niveaux suivant l'une des revendications 1 à 3,
**caractérisé**
**en ce que** le limiteur (MA) de module est réalisé sous la forme d'un high cooling arrester.
